# EUROPÄISCHE PATENTSCHRIFT

(11) **EP 3 669 431 B1**
(45) Veröffentlichungstag und Bekanntmachung des Hinweises auf die Patenterteilung: **09.09.2026**
(21) Anmeldenummer: 18748916.6
(22) Anmeldetag: 31.07.2018
(51) Int. Cl.: H01T 13/39, H01T 21/02, B23K 26/08, B23K 26/082, B23K 26/282

(54) **ZÜNDKERZENELEKTRODE SOWIE VERFAHREN ZUR HERSTELLUNG DIESER ZÜNDKERZENELEKTRODE UND ZÜNDKERZE MIT ZÜNDKERZENELEKTRODE**
SPARK PLUG ELECTRODE AND METHOD FOR PRODUCING THIS SPARK PLUG ELECTRODE AND SPARK PLUG WITH A SPARK PLUG ELECTRODE
ELECTRODE DE BOUGIE D'ALLUMAGE ET PROCÉDÉ DE FABRICATION D'UNE TELLE ÉLECTRODE DE BOUGIE D'ALLUMAGE ET BOUGIE D'ALLUMAGE DOTÉE D'UNE ÉLECTRODE DE BOUGIE D'ALLUMAGE

(30) Priorität: 17.08.2017 DE 102017214311
(43) Veröffentlichungstag der Anmeldung: 24.06.2020
(73) Patentinhaber: Robert Bosch GmbH, 70442 Stuttgart (DE)
(72) Erfinder: QUEST, Dennis, 96050 Bamberg (DE); NUFER, Stefan, 70565 Stuttgart (DE); TANG, Zhuo, 70839 Gerlingen (DE)
(86) Internationale Anmeldenummer: PCT/EP2018/070778
(87) Internationale Veröffentlichungsnummer: WO 2019/034416

(56) Entgegenhaltungen:
- EP-A1- 2 211 433
- DE-A1- 102014 223 792
- DE-B3- 10 243 009
- US-A1- 2004 192 155
- US-A1- 2013 221 832

## Beschreibung

### Stand der Technik

Die Erfindung betrifft eine Zündkerzenelektrode gemäß Anspruch 1, eine Zündkerze mit dieser Zündkerzenelektrode gemäß Anspruch 4 sowie ein Verfahren zur Herstellung dieser Zündkerzenelektrode gemäß Anspruch 5.

Die Lebensdauer einer Zündkerze ist aufgrund der Haltbarkeit ihrer Komponenten begrenzt. Eine dieser Komponente ist die Zündkerzenelektrode bzw. das Material, aus der die Zündkerzenelektrode hergestellt ist. Während ihres Einsatzes in einer Brennkraftmaschine unterliegen die Zündkerzenelektrode und ihr Material ständig Korrosions- und Erosionsprozess. Aufgrund der Oxidation des Materials der Zündkerzenelektrode und des Zündfunkenplasmas beim Betrieb der Brennkraftmaschine vergrößert sich im Lauf der Zeit der Zündspalt zwischen den Zündkerzenelektroden, wodurch die Zündkerze ihre Zündfähigkeit verliert und ausgetauscht werden muss.

Entsprechend ist es das Ziel der heutigen Forschung Material und Materialkombinationen mit einer hohen Korrosions- und Erosionsbeständigkeit zu finden. Zündkerzenelektroden aus heutige verwendetet Nickellegierungen haben eine Lebensdauer von ca. 30 000 km bis 60 000 km. Zündkerzenelektroden aus Edelmetalllegierungen haben eine Lebensdauer von 60 000 km bis 90 000 km und sind aufgrund der Materialkosten deutlich teurer als Zündkerzenelektroden aus einer Nickellegierung.

Zur Reduzierung der Materialkosten wird häufig ein Elektrodengrundkörper aus einer Nickellegierung mit einem Zündelement aus einem Edelmetall oder einer Edelmetalllegierung kombiniert. Der Elektrodengrundkörper und das Zündelement werden mittels eines Schweißverfahrens stoffschlüssig miteinander verbunden. Häufig verwendete Edelmetalle sind Platin und Iridium sowie Legierungen mit diesen Elementen.

Allerdings haben die Edelmetalllegierung und die Nickellegierung unterschiedliche Wärmeausdehnungskoeffizienten, so dass es in der Schweißnaht zu mechanischen Spannungen kommt. Im Extremfall bricht die Schweißnaht und das auf Edelmetall-basierte Zündelement fällt vom Elektrodengrundkörper ab, wodurch die Zündkerze unbrauchbar wird.

Diese Problematik ist bei Ir-basierten Zündelementen stärker ausgeprägt als bei Ptbasierten Zündelemente, da sich der Wärmeausdehnungskoeffizient um ein Faktor 2 zwischen Ir-Legierungen und Ni-Legierungen unterscheidet.

Es gibt verschiede Schweißverfahren, wodurch versucht wird eine stabile Schweißnaht zwischen Zündelement und Elektrodengrundkörper zu erzeugen. Laserschweißen ist sehr verbreitet bei dem Verbinden von Ir-basierten Zündelementen mit Ni-basierten Grundkörpern. Aus der DE 10 103 045 A1 ist beispielsweise ein Laserschweiß-Verfahren bekannt bei dem ein cw-Laserstrahl statisch auf den Verbindungbereich von Zündelement und Elektrodengrundkörper gerichtet ist und die Zündkerzenelektrode um ihre Längsachse oder der Laserstrahl um die Zündkerzenelektrode sich dreht. Aus der EP 0 671 793 A1 ist ein ähnliches Verfahren bekannt, allerdings wird hier ein gepulster Laserstrahl statisch auf den Verbindungsbereich gerichtet. Bei der DE 2014 10 223 792 A1 werden mit einem statischen Laserstrahl zwei Schweißnahten, die leicht zu einander versetzt sind, erzeugt.

Weitere Zündkerzen und Herstellungsverfahren sind auch der US 2013/221832 A1, welche die Merkmale des Oberbegriffs des Anspruchs 1 offenbart, der EP 2 211 433 A1, der DE 10 2014 223792 A1 und der US 2004/192155 A1 bekannt. Aus der DE 102 43 009 B3 ist ein Verfahren zum Verschließen von Ampullen mittels Laser-Scanner-Schweißen bekannt.

Bei den heute erhältlichen Zündkerzen sind das Edelmetall-haltigen Zündelement und der Elektrodengrundkörper in der Regel mittels einem der beiden erstgenannten Verfahren verschweißt worden und haben die oben beschriebenen Problemen.

### Vorteil der Erfindung/ Offenbarung der Erfindung

Aufgabe der Erfindung ist es eine Zündkerzenelektrode und ein Herstellungsverfahren für diese bereit zu stellen, bei der bzw. dem die oben genannten Probleme minimiert werden und die Zündkerzenelektrode und die Zündkerze eine möglichst lange Lebensdauer haben.

Diese Aufgabe wird von der in Anspruch 1 definierten erfindungsgemäßen Zündkerzenelektrode, die einen Elektrodengrundkörper aus einer Ni-Legierung als erstes Material und ein eine Zündfläche einer Zündkerze bildendes Zündelement aus einer Ir-Legierung als zweites Material aufweist, die über eine Schweißnaht stoffschlüssig miteinander verbunden sind, dadurch gelöst, dass in einer ans Zündelement angrenzenden Hälfte der Schweißnaht ein Durchmischungsgrad D für das erste Material oder für das zweite Material kleiner 15 Gew.- % ist.

Zur Ermittlung des Durchmischungsgrad D wird in der Schweißnaht Linienscans zur Ermittlung der Elementkonzentration entlang dieser Linien durchgeführt. Die Linien für die Scans haben typischerweise äquidistante Abstände zu einander und verlaufen senkrecht zu einer Längsachse des Zündelements, also parallel zum Durchmesser der Schweißnaht. Vorzugsweise wird ein Linienscan beim Zündelement zur Bestimmung eines Referenzwerts für die Elementkonzentration des ersten Materials und des zweiten Materials durchgeführt. Ein weiterer Linienscan erfolgt vorzugsweise an der Grenzfläche zwischen dem Zündelement und der Schweißnaht. Zusätzlich können weitere beliebig viele Linienscans in der Schweißnaht durchgeführt werden. Vorteilhafterweise nimmt man mindestens 4 Linienscans als Grundlage für die Bestimmung des Durchmischungsgrads. Für jeden Linienscan ergibt sich für das erste Material und für das zweite Material ein Wert für die Elementkonzentration in der jeweiligen Linie. Bei Legierungen ist es beispielsweise ausreichend nur die Konzentration des Hauptbestandteils zu ermitteln und für die weitere Auswertung zur Bestimmung des Durchmischungsgrads D zu werden. Aus den für jede Linie bestimmte Elementkonzentration wird für jedes Material bzw. Element der Mittelwert und die dazugehörige Standardabweichung berechnet. Die Standardabweichung ist dann der Durchmischungsgrad D, der ein Maß für die Verteilung der Elemente und das jeweilige Material in der Schweißnaht ist. Je kleiner der Durchmischungsgrad D ist umso gleichmäßiger ist die Verteilung der Elemente in der Schweißnaht. Untersuchungen der Anmelderin haben gezeigt, dass je gleichmäßiger die Verteilung der Elemente ist umso geringer sind die Unterschiede im Wärmeausdehnungskoeffizient zwischen Zündelement, Schweißnaht und Elektrodengrundkörper, entsprechend reduziert sich auch die mechanische Spannung an den Grenzflächen. Somit reduziert sich die Wahrscheinlichkeit von Rissbildung in der Schweißnaht und die Lebensdauer der Zündkerze erhöht sich. Der Durchmischungsgrad D ist somit auch ein Qualitätsmerkmal für die Schweißnaht und die Schweißung.

Für ein Beispiel mit 4 Linienscans (n=4) berechnet sich der Durchmischungsgrad wie folgt: $D = \sqrt{\frac{1}{n - 1} ∗ {\sum }_{i = 1}^{n} {\left({L}_{i}-\overline{L}\right)}^{2}} ,$ mit
- D: Durchmischungsgrad,
- n: Anzahl der Linienscans,
- *Lᵢ*: Elementkonzentration in der i. Linie,
- *L̅*: Mittelwert der Elementkonzentration.

Dabei ist der Mittelwert: $\overline{L} = \frac{1}{n} {\sum }_{i = 1}^{n} {L}_{i} .$

Zur Bestimmung eines Referenzwertes für die Elementkonzentration des ersten Materials und/oder des zweiten Materials wird der erste Linienscan L₁ außerhalb der Schweißnaht am Zündelement durchgeführt.

Eine gleichmäßige Verteilung muss nicht bedeuten, dass in der Schweißnaht das erste Material mit dem zweiten Material sich mischt und eine neue Legierung bildet. Die Untersuchung der Anmelderin haben gezeigt, dass für eine stabile und langlebige Schweißnaht es durchaus auch vorteilhaft ist, wenn es in der Schweißnaht Bereiche gibt, die im Wesentlichen aus dem ersten Material und/oder im Wesentlichen aus dem zweiten Material und/oder im Wesentlichen aus einer Mischung aus dem ersten und zweiten Material bestehen. Beim Linienscan über diese verschiedenen Bereiche wird die Materialkonzentration bzw. die Elementkonzentration über diese Bereiche gemittelt. Der Durchmischungsgrad D gibt dann an wie gleichmäßig diese unterschiedlichen Bereiche in der Schweißnaht verteilt sind.

Ein weiteres Ergebnis der Untersuchungen der Anmelderin ist auch, dass sich die unerwünschten Risse bei den Zündkerzenelektroden gemäß dem Stand der Technik hauptsächlich in der Hälfte der Schweißnaht bilden, die an das Zündelement angrenzen. Somit ist es ausreichend für die Qualitätsbestimmung der Schweißnaht den Durchmischungsgrad D für die dem Zündelement zugewandte Hälfte der Schweißnaht zu ermitteln.

Natürlich ist es möglich die Anzahl der Linienscans, die Größe des untersuchten Bereichs in der Schweißnaht und/oder auch die Anzahl der untersuchten Elemente und Materialien zu erhöhen und somit die Messunsicherheit des Durchmischungsgrads D zu verkleinern und gleichzeitig die Aussagekraft des Durchmischungsgrads D zu erhöhen. Die Unteransprüche betreffen vorteilhafte Weiterentwicklungen der Erfindung, bei denen teilweise die oben aufgezählten Variationen realisiert werden.

Die Untersuchungen der Anmeldering haben gezeigt, dass es vorteilhafter ist, wenn der Durchmischungsgrad D kleiner oder gleich 12 Gew.-% ist. Besonders gute Ergebnisse wurden für Zündkerzenelektroden erreicht, bei denen der Durchmischungsgrad D kleiner oder gleich 10 Gew.-% für das erste Material oder das zweite Material in der ans Zündelement angrenzenden Hälfte der Schweißnaht ist.

Alternativ ist es auch vorteilhaft, wenn der Durchmischungsgrad D für das erste und das zweite Material kleiner 15 Gew.-%, insbesondere kleiner oder gleich 12 Gew.-%, besonders bevorzugt sogar kleiner oder gleich 10 Gew.-% ist. Dadurch wird sichergestellt, dass es eine möglichst homogene Verteilung von beiden Materialien in der Schweißnaht gibt.

Ein weiterer Aspekt der Erfindung betrifft eine Zündkerze, die mindestens eine erfindungsgemäße Zündkerzenelektrode hat. Vorzugsweise ist diese Zündkerzenelektrode als Mittelelektrode ausgebildet.

Ein dritter Aspekt der Erfindung betrifft ein Herstellungsverfahren für die erfindungsgemäße Zündkerzenelektrode mit einem Elektrodengrundkörper aus einer Ni-Legierung als erstes Material und einem Zündelement aus einer Ir-Legierung als zweites Material. Das Herstellungsverfahren weist die Schritte auf:
- Bereitstellen des Elektrodengrundkörpers und des Zündelements.
- ausführen eines Schweißvorgangs zum Verbinden des Elektrodengrundkörpers und des Zündelements unter Bildung einer Schweißnaht,
- wobei ein Schweißstrahl über ein Reflektionsmittel auf eine Verbindungsstelle zwischen Elektrodengrundkörper und Zündelement gerichtet wird und die Schweißnaht erzeugt, und
- durch Kippen des Reflektionsmittels wird der Schweißstrahl über die Oberfläche der Zündelektrode zur Erzeugung der Schweißnaht geführt.

Durch das Kippen, insbesondere ein periodisches Kippen, des Reflektionsmittels ergibt sich eine örtliche Modulation des Schweißstrahls auf der Oberfläche der Zündkerzenelektrode. Das an der Verbindungsstelle und an der Verbindungsfläche von dem Zündelement zum Elektrodengrundkörper entstehende Schweißbad bekommt durch diese örtliche Modulation eine zusätzlich Dynamik, die eine zusätzliche Mischung zu der durch die Thermodynamik getriebene Durchmischung des ersten Materials mit dem zweiten Material bewirkt. Mit diesem Schweißverfahren bekommt das geschmolzene erste Material bzw. das zweite Material eine wesentlich größere Reichweite und kann sich innerhalb des Schmelzbades, woraus die Schweißnaht entsteht, weiterbewegen und teilweise mit dem anderen Material mischen.

Das Reflektionsmittel ist beispielsweise ein Spiegel oder ein sogenannter Scanner.

Vorzugsweise ist vorgesehen, dass der Schweißstrahl entlang einer Linie auf der Oberfläche der Zündelektrode geführt wird, die parallel zu einer Längsachse X des Zündelements ist. Vorteilhafterweise erstreckt sich diese Längsachse durch die Verbindungsfläche zwischen Zündelement und Elektrodengrundköper, sprich auch durch die spätere Schweißnaht.

Es hat sich als vorteilhaft herausgestellt, wenn das das Reflektionsmittel mit einer Frequenz von mindestens 1000 Hz gekippt wird. Beispielsweise wird das Reflektionsmittel mit einer Frequenz von 1200Hz gekippt. Dadurch ergibt sich, dass der Schweißstrahl im Wesentlichen eine Bewegung parallel zu der Längsachse X des Zündelements durchführt und mehrmals die gleiche Linie bzw. den gleichen Bereich überstreift.

Dies wird auch beispielsweise dadurch unterstützt, wenn die Zündkerzenelektrode während des Schweißverfahrens rotiert und die Rotationsfrequenz der Zündkerzenelektrode kleiner ist als die Frequenz, mit der das Reflektionsmittel gekippt wird. Durch das verhältnismäßige schnelle Kippen des Reflektionsmittels im Vergleich zu der Rotation der Zündkerzenelektrode führt der Schweißstrahl quasi eine Scannerbewegung auf der Oberfläche der Zündkerzenelektrode aus.

Der Schweißstrahl kann beispielsweise ein Laserstrahl, insbesondere von einem cw-Laser wie beispielsweise einen Scheibenlaser oder einem Faserlaser, sein. In Kombination mit einem Scanner als Reflektionsmittel ergibt sich für den Schweißvorgang ein Laser-Scanner-Schweißverfahren.

Durch die oben beschriebenen verschiedenen Ausgestaltungen des erfindungsgemäßen Herstellungsverfahrens, ergibt sich, dass in der Schweißnaht sich ein Durchmischungsgrad D von kleiner 15 Gew.-% für das erste Material und/oder das zweite Material einstellt. Wodurch sich auch hier die vorteilhaften Effekte, die oben bei der erfindungsgemäßen Zündkerzenelektrode beschrieben sind, einstellen.

### Zeichnung

Figur 1 zeigt ein Beispiel für das erfindungsgemäße Herstellungsverfahren eine Zündkerzenelektrode
Figur 2a, Figur 2b, Figur 2c zeigen Bilder von EDX-Messung an einer erfindungsgemäßen Zündkerzenelektrode und zwei Zündkerzenelektrode gemäß dem Stand der Technik.
Figur 3a zeigt ein Beispiel für die Ermittlung des Durchmischungsgrads D
Figur 3b zeigt den Durchmischungsgrad D für jeweils zwei Elemente von zwei Proben, hergestellt mit bekannten Schweißverfahren, im Vergleich von einer erfindungsgemäßen Probe

### Beschreibung des Ausführungsbeispiels

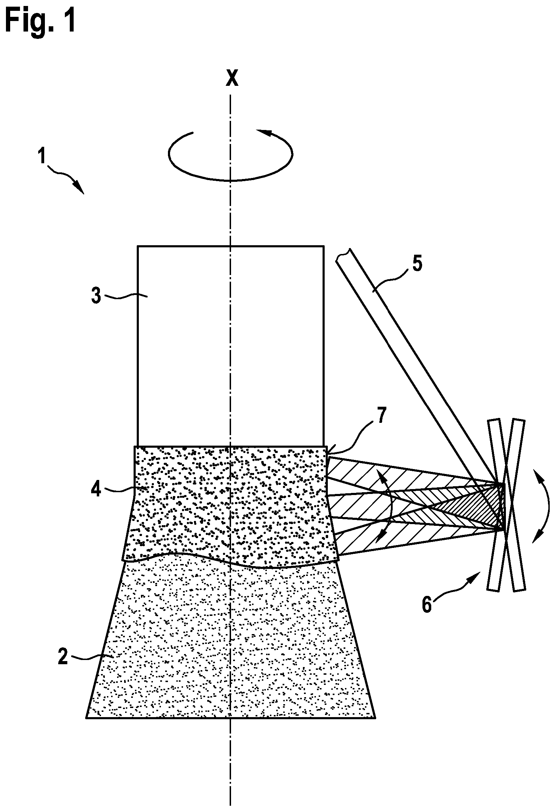

Figur 1 zeigt schematisch ein Beispiel für das erfindungsgemäße Herstellungsverfahren. Dargestellt ist eine Zündkerzenelektrode 1 mit einem Elektrodengrundkörper 2, einem Zündelement 3 und einer Schweißnaht 4, die den Elektrodengrundkörper 2 und das Zündelement 3 stoffschlüssig miteinander verbindet. Das Zündelement 3 hat eine Längsachse X, die sich senkrecht zu der Verbindungsfläche zwischen dem Zündelement 3 und dem Elektrodengrundkörper 2, bzw. zur Schweißnaht 4 nach dem Schweißvorgang, erstreckt. Das Zündelement ist beispielsweise in der Form eines Stiftes oder eines Pins ausgebildet. Die Zündkerzenelektrode 1 hat eine Oberfläche 7, die durch die Oberfläche des Zündelements 2 und die Oberfläche des Elektrodengrundkörpers 2 gebildet wird. Der Bereich der Oberfläche der Zündelektrode um die Verbindungsfläche zwischen Elektrodengrundkörper 2 und Zündelement 3 wird auch als Verbindungsstelle bezeichnet. An der Verbindungsfläche und der Verbindungstelle entstehen beim Schweißvorgang erst das Schmelzbad und anschließend die Schweißnaht 4.

Über ein Reflektionsmittel 6, beispielsweise ein Spiegel, wird der Schweißstrahl 5, z.B. ein Laserstrahl, auf die Verbindungsstelle zwischen Elektrodengrundkörper 2 und Zündelement 3 gelenkt und erzeugt dort die Schweißnaht 4. So ein Schweißverfahren ist beispielsweise das Laser-Scanner-Schweißverfahren, bei dem ein Laserstrahl über einen Scanner auf die zu verschweißenden Objekte gerichtet wird und eine Schweißnaht erzeugt. Durch die Bewegung des Scanners wird der Laserstrahl an die gewünschte Position bei den Objekten geführt. Typischerweise werden cw-Laser, wie beispielsweise ein Faserlaser oder ein Scheibenlaser, zur Erzeugung des Laserstrahls benutzt.

Typischerweise erstreckt sich das Schmelzbad für die Schweißnaht 4 bei der Zündkerzenelektrode 1 mindestens bis zur Längsachse X des Zündelements 3, so dass nach einer Rotation der Zündelektrode 1 um die Längsachse X beim Schweißvorgang die Verbindungsfläche zwischen dem Elektrodengrundkörper 2 und dem Zündelement 3 komplett aufgeschmolzen ist, d.h. die Schweißnaht 4 erstreckt über den gesamten Durchmesser des Zündelements 3.

Während des Einstrahlens des Schweißstrahls 5 auf die Oberfläche 7 der Zündelektrode 1 wird das Reflektionsmittel 6 periodisch gekippt, so dass der Schweißstrahl 5 in einer periodischen Bewegung entlang der Oberfläche 7 ausführt. Vorzugsweise ist die Bewegung parallel zu Längsachse X des Zündelements 3. Durch diese örtliche Modulation des Einstrahlens des Schweißstrahls 5 wird im Schmelzbad an der Verbindungsfläche zwischen Zündelement 3 und Elektrodengrundkörper 2 eine wesentlich höhere Dynamik und bessere Vermischung vom ersten Material und zweiten Material in der Schweißnaht 4 erreicht.

Typischerweise wird das Reflektionsmittel 5 mit einer Frequenz von mindestens 1000 Hz, hier z.B. 1200 Hz, gekippt. Die Rotation der Zündelektrode 1 um die Längsachse X des Zündelements 3 hat eine wesentlich geringere Frequenz.

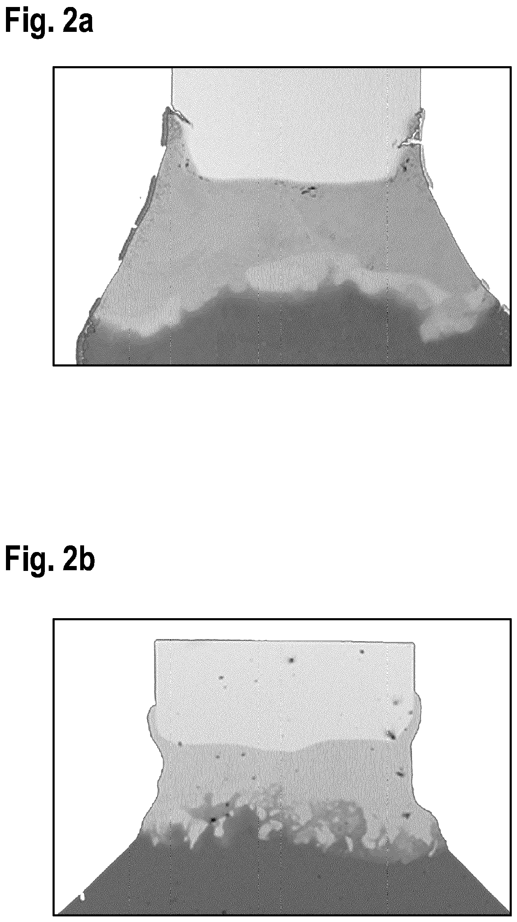

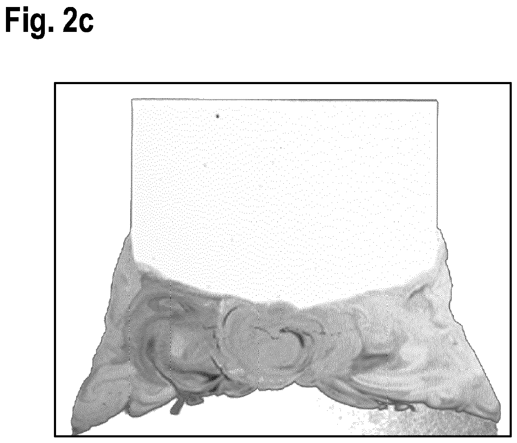

In Figur 2 a)-c) sind EDX-Bilder von Schliffen von drei Zündelektroden 1 gezeigt, die mit unterschiedlichen Schweißverfahren hergestellt wurden. Bei der Probe 1 (P1) in Figur 2 a) wurde die Schweißnaht durch einen statisch auf die Verbindungsstelle einstrahlenden cw-Laserstrahl erzeugt, wobei die Zündkerzenelektrode 1 sich um ihre Längsachse drehte. Das Zündelement besteht aus Iridium. Der Elektrodengrundkörper besteht aus einer Ni-Legierung. Probe 2 (P2), Figur 2 b) ist eine Zündkerzenelektrode 1 mit einem Elektrodengrundkörper 2 auf Ni-Basis und einem Zündelement 3 aus einer Ir-Legierung. Die Schweißnaht wurde bei Probe 2 mittels eines gepulsten Lasers erzeugt. Probe 3 in Figur 2 c) zeigt eine erfindungsgemäße Zündkerzenelektrode 1, die mittels des erfindungsgemäßen Herstellungsverfahrens hergestellt wurde. Über einen Scanner 6 wurde ein cw-Laserstrahl 5 über die Zündkerzenelektroden-Oberfläche 7 geführt. Das Zündelement 3 besteht aus einer Ir-Legierung und der Elektrodengrundkörper ist aus einer Ni-Legierung.

Die Grauabstufungen in den Schliffbildern spiegeln unterschiedliche Elementkonzentrationen wieder. Die Schweißnaht von Probe 1 scheint eine recht einheitliche Graufärbung zu haben. Die Schweißnaht von Probe 2 zeigt dagegen starke Verwirbelungen mit unterschiedlichen Graustufen. Bei Probe 3 zeigt die Schweißnaht größere und kleinere Bereiche mit unterschiedlicher Graustufen, die relative scharf zu einander abgegrenzt sind.

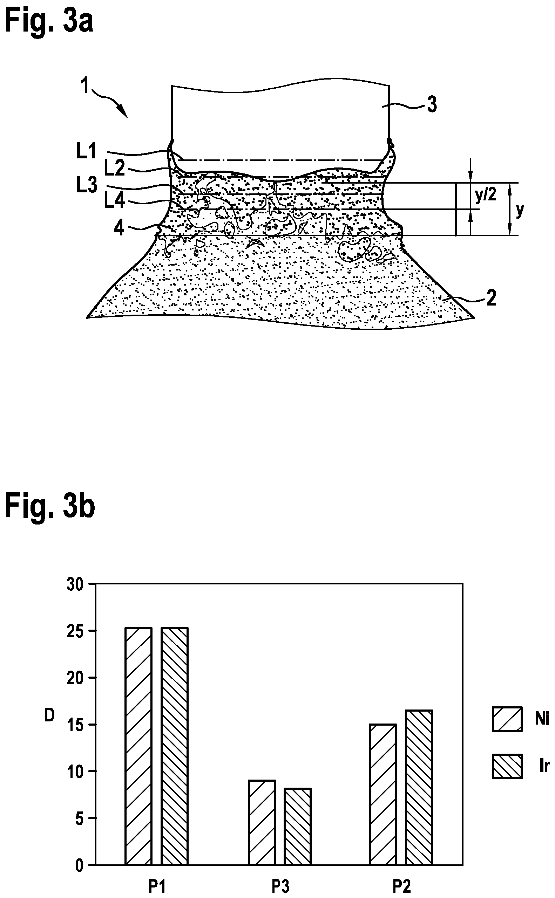

Zur Bestimmung der Qualität einer Schweißnaht wird der Durchmischungsgrad D für jede Probe ermittelt. Für die Bestimmung von dem Durchmischungsgrad D wird zunächst die Breite y der Schweißnaht entlang der Verlängerung der Längsachse X des Zündelements 3 bestimmt. Entlang von 4 Linien senkrecht zur Längsachse X des Zündelements 3 wird die Elementkonzentration von den beiden Hauptelementen des Elektrodengrundkörpers 2 und des Zündelements 3, hier Ni und Ir, bestimmt. Eine Linie (L4) wird in der Mitte der Schweißnaht bei y/2, gemessen von der ans Zündelement angrenzenden Kante der Schweißnaht (obere Kante), gemessen. Eine zweite Linie (L2) wird an der oberen Kante der Schweißnaht gemessen. Eine dritte Linie (L3) wird entlang des halben Abstands zwischen der Linie 4 und der Linie 3 gemessen. Eine letzte Linie (L1) wird als Referenz im Zündelement 3 gemessen, wobei die Linien 1 bis 4 alle den gleichen Abstand zu einander haben. Die Linien überdecken 90% des Durchmessers der Schweißnaht, bzw. des Durchmessers der Schweißnaht an der oberen Kante, wenn der Durchmesser nicht konstant ist. Die Mittelpunkte der Linien liegen auf der Verlängerung der Längsachse X des Zündelements 3. Die Elementkonzentration entlang einer Linie wurde mittels EDX- Analyse (Energiedispersive Röntgenspektroskopie) ermittelt und ist entsprechend eine Mittelung über Bereiche mit gegebenenfalls unterschiedlicher Konzentration, wie beispielsweise bei Probe 2 und Probe 3 zu sehen ist. In Figur 3 a) ist am Beispiel der erfindungsgemäßen Probe P3 die Anordnung der Linien L1, L2, L3 und L4 dargestellt.

**Tabelle 1**

| | Probe 1 (P1) | | Probe 2 (P2) | | Probe 3 (P3) | |
|---|---|---|---|---|---|---|
| | Ni (Gew.%) | Ir (Gew.%) | Ni (Gew.%) | Ir (Gew.%) | Ni (Gew.%) | Ir (Gew.%) |
| Linie 1 (L1) | 6,8 | 93,2 | 10,6 | 69,0 | 0,0 | 88,5 |
| Linie 2 (L2) | 46,2 | 53,8 | 35,0 | 42,8 | 14,8 | 71,4 |
| Linie 3 (L3) | 62,9 | 37,1 | 43,0 | 34,0 | 19,1 | 71,6 |
| Linie 4 (L4) | 57,5 | 42,5 | 41,2 | 36,5 | 19,8 | 72,8 |
| Mittelwert | 43,4 | 56,7 | 32,5 | 45,6 | 13,4 | 76,1 |
| D | 25,3 | 25,3 | 15,0 | 16,0 | 9,2 | 8,3 |

In Tabelle 1 sind die Elementkonzentrationen für die drei Proben und den jeweils 4 Linien für jeweils die Elemente Ni und Ir aufgeschrieben. Bei den Proben bestanden der Grundkörper hauptsächlich aus Ni und das Zündelement hauptsächlich aus Ir. Der prozentuale Rest bei einigen Proben besteht aus Rh und anderen Elementen, die bei der Analyse der Schweißnaht nicht berücksichtigt wurden.

Bei jeder Probe wird für jedes Element über die 4 Linien ein Mittelwert gebildet. Der Durchmischungsgrad D entspricht der Standardabweichung vom Mittelwert für jedes Element. Je kleiner der Durchmischungsgrad D ist umso kleiner ist auch die Standardabweichung. Dies entspricht wiederum im Mittel einer relativ homogenen Elementverteilung in der Schweißnaht.

Für dieses Beispiel mit 4 Linienscans (n=4) berechnet sich der Durchmischungsgrad wie folgt: $D = \sqrt{\frac{1}{n - 1} ∗ {\sum }_{i = 1}^{n} {\left({L}_{i}-\overline{L}\right)}^{2}} ,$ mit
- D: Durchmischungsgrad,
- n: Anzahl der Linienscans,
- *Lᵢ*: Elementkonzentration in der i. Linie,
- *L̅*: Mittelwert der Elementkonzentration.

Dabei ist der Mittelwert: $\overline{L} = \frac{1}{n} {\sum }_{i = 1}^{n} {L}_{i} .$

Zur Bestimmung des Referenzwertes für die Elementkonzentration des ersten Materials (Nickel) und des zweiten Materials (Iridium) wird der erste Linienscan L₁ außerhalb der Schweißnaht am Zündelement durchgeführt.

In Figur 3 b) sind die beiden Durchmischungsgrade D für Ni und Ir für jede Probe graphisch dargestellt. Die beiden Proben 1 und 2 gemäß dem Stand der Technik haben für beide Elemente einen Durchmischungsgrad von mindestens 15 Gew.-%. Die Untersuchungen der Anmelderin haben gezeigt, dass die Schweißnaht besonders stabil ist je kleiner der Durchmischungsgrad ist. Für die Probe 3 gemäß der Erfindung ergibt für die Elemente ein Durchmischungsgrad kleiner 10 Gew.-%.

Im Rahmen der Untersuchungen der Anmelderin wurden auch Untersuchungen durchgeführt, bei denen über die gesamte Breite y der Schweißnaht äquidistant verteilte EDX Line-Scans durchgeführt wurden und entsprechend dem oben beschriebenen Vorgehen daraus der Mittelwert und die Standardabweichung bzw. der Durchmischungsgrad D für die Elemente bestimmt wurden. Die Ergebnisse für den über die volle Breite ermittelten Durchmischungsgrad D unterscheiden sich nicht wesentlich von den über die halbe Breite ermittelten Durchmischungsgrad D. Des Weiteren haben die Untersuchungen gezeigt, dass bei Zündelektroden gemäß dem Stand der Technik die Risse und Bruchstellen in der Schweißnaht in der oberen Hälfte der Schweißnaht, sprich in der zum Zündelement zu gewandten Hälfte der Schweißnaht, entstehen. Somit ist eine Qualitätskontrolle bzw. eine Verbesserung der Schweißnaht gerade für die obere Hälfte der Schweißnaht wesentlich für die Verbesserung der Zündkerzen-Dauerhaltbarkeit. Zur Effizienzsteigerung der Qualitätsanalyse und Qualitätskontrolle wird sich für die Bestimmung des Durchmischungsgrad auf die obere Hälfte der Schweißnaht konzentriert.

## Patentansprüche

1. Zündkerzenelektrode (1), aufweisend
• einen Elektrodengrundkörper (2) aus einer Ni-Legierung als erstes Material und
• ein Zündelement (3) aus einer Ir-Legierung als zweites Material, wobei das Zündelement (3) dazu eingerichtet ist eine Zündfläche für eine Zündkerze zu bilden, wobei der Elektrodengrundkörper (2) und das Zündelement (3) über eine Schweißnaht (4) stoffschlüssig miteinander verbunden sind, wobei das Zündelement eine Längsachse X hat, die sich senkrecht zu der Schweißnaht (4) zwischen dem Zündelement und dem Elektrodengrundkörper erstreckt
**dadurch gekennzeichnet, dass** in einer ans Zündelement (3) angrenzenden Hälfte der Schweißnaht (4) ein Durchmischungsgrad (D) für das erste Material oder das für das zweite Material kleiner 15 Gew.-% ist,
wobei für die Bestimmung von dem Durchmischungsgrad (D) zunächst die Breite (y) der Schweißnaht (4) entlang einer Verlängerung einer Längsachse (X) des Zündelements (3) bestimmt wird, wobei entlang von vier Linien senkrecht zur Längsachse (X) des Zündelements (3) die Elementkonzentration des Ni des ersten Materials oder des Ir des zweiten Material bestimmt wird, wobei eine erste Linie (L4) der vier Linien in der Mitte der Schweißnaht (y/2) gemessen von der ans Zündelement (3) angrenzenden Kante der Schweißnaht (4) gemessen wird und wobei eine zweite Linie (L2) der vier Linien an der ans Zündelement (3) angrenzenden Kante der Schweißnaht (4) gemessen wird und wobei eine dritte Linie (L3) der vier Linien entlang des halben Abstands zwischen der ersten Linie (L4) und der zweiten Linie (L2) gemessen wird und eine letzte Linie (L1) der vier Linien im Zündelement (3) gemessen wird, wobei die vier Linien alle den gleichen Abstand zu einander haben und die vier Linien 90% des Durchmessers der Schweißnaht (4) überdecken, bzw. des Durchmessers der Schweißnaht (4) an der ans Zündelement angrenzenden Kante überdecken, wenn der Durchmesser nicht konstant ist, wobei die Mittelpunkte der vier Linien auf der Verlängerung der Längsachse (X) des Zündelements (3) liegen und wobei die Elementkonzentration entlang einer Linie mittels EDX- Analyse ermittelt wird durch eine Mittelung über Bereiche mit gegebenenfalls unterschiedlicher Konzentration, wobei die Elementkonzentration für jedes der beiden Elemente über die vier Linien ein Mittelwert gebildet wird und der Durchmischungsgrad D der Standardabweichung vom Mittelwert für jedes der beiden Elemente entspricht.

2. Zündkerzenelektrode (1) nach Anspruch 1, **dadurch gekennzeichnet, dass** der Durchmischungsgrad (D) kleiner oder gleich 12 Gew.-% ist, insbesondere kleiner oder gleich 10 Gew.-% ist.

3. Zündkerzenelektrode (1) nach Anspruch 1, **dadurch gekennzeichnet, dass** der Durchmischungsgrad (D) für das erste Material und das zweite Material kleiner 15 Gew.-%, insbesondere kleiner oder gleich 12 Gew.-% ist.

4. Zündkerze mit mindestens einer Zündkerzenelektrode (1) nach einem der Ansprüche 1 bis 3, wobei insbesondere die Zündkerzenelektrode (1) eine Mittelelektrode ist.

5. Verfahren zur Herstellung einer Zündkerzenelektrode (1) nach einem der Ansprüche 1 bis 3, mit einem Elektrodengrundkörper (2) aus einer Ni-Legierung als erstes Material und einem Zündelement (3) aus einer Ir-Legierung als zweites Material, aufweisend die Schritte:
• Bereitstellen des Elektrodengrundkörpers (2) und des Zündelements (3)
• Ausführen eines Schweißvorgangs zum Verbinden des Elektrodengrundkörpers (2) und des Zündelements (4) unter Bildung einer Schweißnaht (4), wobei der Schweißvorgang ein Laser-Scanner-Schweißverfahren ist,
• wobei ein Schweißstrahl (5) über ein Reflektionsmittel (6) auf eine Verbindungsstelle zwischen Elektrodengrundkörper (2) und Zündelement (3) gerichtet wird und die Schweißnaht (4) erzeugt, wobei der Schweißstrahl (5) ein Laserstrahl ist und das Reflektionsmittel (6) ein Scanner ist,
• durch Kippen des Reflektionsmittels (6) der Schweißstrahl (5) über die Oberfläche (7) der Zündelektrode (1) zur Erzeugung der Schweißnaht (4) geführt wird.

6. Verfahren nach Anspruch 5, **dadurch gekennzeichnet, dass** der Schweißstrahl (5) entlang einer Linie auf der Oberfläche (7) geführt wird, die parallel zu einer Längsachse (X) des Zündelements (3) ist.

7. Verfahren nach einem der Ansprüche 5 bis 6, **dadurch gekennzeichnet, dass** das Reflektionsmittel (6) mit einer Frequenz von mindestens 1000 Hz gekippt wird.

8. Verfahren nach Anspruch 7, **dadurch gekennzeichnet, dass** die Zündkerzenelektrode (1) während des Schweißverfahrens rotiert, und dass die Rotationsfrequenz der Zündkerzenelektrode (1) kleiner ist als die Frequenz, mit der das Reflektionsmittel (6) gekippt wird.

## Claims

1. Spark plug electrode (1), comprising
• an electrode main body (2) composed of a Ni alloy as first material and
• an ignition element (3) composed of an Ir alloy as second material, wherein the ignition element (3) is configured to form an ignition surface for a spark plug, wherein the electrode main body (2) and the ignition element (3) are connected to one another in a materially bonded manner via a weld seam (4), wherein the ignition element has a longitudinal axis X, which extends perpendicularly to the weld seam (4) between the ignition element and the electrode main body,
**characterized in that**, in a half of the weld seam (4) adjacent to the ignition element (3), a degree of mixing (D) for the first material or for the second material is less than 15% by weight,
wherein, for the determination of the degree of mixing (D), the width (y) of the weld seam (4) along an extension of a longitudinal axis (X) of the ignition element (3) is first determined, wherein the element concentration of the Ni of the first material or the Ir of the second material is determined along four lines perpendicular to the longitudinal axis (X) of the ignition element (3), wherein a first line (L4) of the four lines in the centre of the weld seam (y/2), measured from the edge of the weld seam (4) adjacent to the ignition element (3), is measured and wherein a second line (L2) of the four lines at the edge of the weld seam (4) adjacent to the ignition element (3) is measured and wherein a third line (L3) of the four lines along half the distance between the first line (L4) and the second line (L2) is measured and a last line (L1) of the four lines in the ignition element (3) is measured, wherein the four lines are all at the same distance from one another and the four lines cover 90% of the diameter of the weld seam (4), or of the diameter of the weld seam (4) at the edge adjacent to the ignition element if the diameter is not constant, wherein the centres of the four lines lie on the extension of the longitudinal axis (X) of the ignition element (3) and wherein the element concentration along a line is determined by means of EDX analysis by averaging over regions with possibly different concentration, wherein the element concentration for each of the two elements over the four lines an average is formed and the degree of mixing D corresponds to the standard deviation from the average for each of the two elements.

2. Spark plug electrode (1) according to Claim 1, **characterized in that** the degree of mixing (D) is less than or equal to 12% by weight, in particular less than or equal to 10% by weight.

3. Spark plug electrode (1) according to Claim 1, **characterized in that** the degree of mixing (D) for the first material and the second material is less than 15% by weight, in particular less than or equal to 12% by weight.

4. Spark plug comprising at least one spark plug electrode (1) according to any of Claims 1 to 3, wherein in particular the spark plug electrode (1) is a centre electrode.

5. Method for producing a spark plug electrode (1) according to any of Claims 1 to 3, comprising an electrode main body (2) composed of a Ni alloy as first material and an ignition element (3) composed of an Ir alloy as second material, comprising the steps:
• providing the electrode main body (2) and the ignition element (3),
• carrying out a welding operation for connecting the electrode main body (2) and the ignition element (4) so as to form a weld seam (4), wherein the welding operation is a laser scanner welding method,
• wherein a welding beam (5) is directed via a reflecting means (6) onto a connecting point between the electrode main body (2) and the ignition element (3) and generates the weld seam (4), wherein the welding beam (5) is a laser beam and the reflecting means (6) is a scanner,
• tilting of the reflecting means (6) causes the welding beam (5) to be guided over the surface (7) of the ignition electrode (1) for generation of the weld seam (4).

6. Method according to Claim 5, **characterized in that** the welding beam (5) is guided along a line on the surface (7), which is parallel to a longitudinal axis (X) of the ignition element (3).

7. Method according to any of Claims 5 to 6, **characterized in that** the reflecting means (6) is tilted with a frequency of at least 1000 Hz.

8. Method according to Claim 7, **characterized in that** the spark plug electrode (1) rotates during the welding method, and **in that** the rotational frequency of the spark plug electrode (1) is lower than the frequency with which the reflecting means (6) is tilted.

## Revendications

1. Electrode (1) de bougie d'allumage comportant
• un corps principal (2) d'électrode composé d'un alliage de Ni en tant que premier matériau et
• un élément d'allumage (3) composé d'un alliage de Ir en tant que deuxième matériau, l'élément d'allumage (3) étant mis au point pour former une surface d'allumage pour une bougie d'allumage, le corps principal (2) d'électrode et l'élément d'allumage (3) étant reliés l'un à l'autre par liaison de matière par un cordon de soudure (4), l'élément d'allumage ayant un axe longitudinal X, qui s'étend perpendiculairement au cordon de soudure (4) entre l'élément d'allumage et le corps principal d'électrode
**caractérisée en ce que**, dans une moitié du cordon de soudure (4) adjacente à l'élément d'allumage (3), un degré de mélange (D) pour le premier matériau ou pour le deuxième matériau est inférieur à 15 % en poids,
d'abord la largeur (y) du cordon de soudure (4) étant déterminée le long d'un axe longitudinal (X) de l'élément d'allumage (3) pour déterminer le degré de mélange (D), la concentration en éléments de Ni du premier matériau ou de Ir du deuxième matériau étant déterminée le long de quatre lignes perpendiculairement à l'axe longitudinal (X) de l'élément d'allumage (3), une première ligne (L4) des quatre lignes étant mesurée au centre du cordon de soudure (y/2) mesuré à partir du bord du cordon de soudure (4) adjacent à l'élément d'allumage (3), et une deuxième ligne (L2) des quatre lignes étant mesurée sur le bord du cordon de soudure (4) adjacent à l'élément d'allumage (3), et une troisième ligne (L3) des quatre lignes étant mesurée le long de la moitié de la distance entre la première ligne (L4) et la deuxième ligne (L2) et une dernière ligne (L1) des quatre lignes étant mesurée dans l'élément d'allumage (3), les quatre lignes ayant toutes la même distance les unes par rapport aux autres et les quatre lignes couvrant 90 % du diamètre du cordon de soudure (4) ou du diamètre du cordon de soudure (4) sur le bord adjacent à l'élément d'allumage, lorsque le diamètre n'est pas constant, les centres des quatre lignes étant situés dans le prolongement de l'axe longitudinal (X) de l'élément d'allumage (3), et la concentration en éléments étant déterminée le long d'une ligne par une analyse EDX en calculant une moyenne sur des zones avec des concentrations éventuellement différentes, la concentration en éléments pour chacun des deux éléments sur les quatre lignes une moyenne étant obtenue et le degré de mélange D correspondant à l'écart type par rapport à la moyenne pour chacun des deux éléments.

2. Electrode (1) de bougie d'allumage selon la revendication 1, **caractérisée en ce que** le degré de mélange (D) est inférieur ou égal à 12 % en poids, en particulier inférieur ou égal à 10 % en poids.

3. Electrode (1) de bougie d'allumage selon la revendication 1, **caractérisée en ce que** le degré de mélange (D) pour le premier matériau et le deuxième matériau est inférieur à 15 % en poids, en particulier inférieur ou égal à 12 % en poids.

4. Bougie d'allumage avec au moins une électrode (1) de bougie d'allumage selon l'une des revendications 1 à 3, l'électrode (1) de bougie d'allumage étant en particulier une électrode centrale.

5. Procédé de fabrication d'une électrode (1) de bougie d'allumage selon l'une des revendications 1 à 3, avec un corps principal (2) d'électrode composé d'un alliage de Ni en tant que premier matériau et un élément d'allumage (3) composé d'un alliage de Ir en tant que deuxième matériau, comportant les étapes :
• fourniture du corps principal (2) d'électrode et de l'élément d'allumage (3)
• réalisation d'une opération de soudage pour relier le corps principal (2) d'électrode et l'élément d'allumage (4) tout en formant un cordon de soudure (4), l'opération de soudage étant un procédé de soudage par balayage laser,
• un faisceau de soudage (5) étant dirigé par un moyen de réflexion (6) sur un point de liaison entre le corps principal (2) d'électrode et l'élément d'allumage (3) et générant le cordon de soudure (4), le faisceau de soudage (5) étant un faisceau laser et le moyen de réflexion (6) étant un dispositif de balayage,
• le faisceau de soudage (5) étant guidé sur la surface (7) de l'électrode (1) d'allumage pour générer le cordon de soudure (4) par basculement du moyen de réflexion (6).

6. Procédé selon la revendication 5, **caractérisé en ce que** le faisceau de soudage (5) est guidé le long d'une ligne sur la surface (7) qui est parallèle à un axe longitudinal (X) de l'élément d'allumage (3).

7. Procédé selon l'une des revendications 5 à 6, **caractérisé en ce que** le moyen de réflexion (6) est basculé à une fréquence d'au moins 1000 Hz.

8. Procédé selon la revendication 7, **caractérisé en ce que** l'électrode (1) de bougie d'allumage tourne pendant le procédé de soudage, et que la fréquence de rotation de l'électrode (1) de bougie d'allumage est inférieure à la fréquence à laquelle le moyen de réflexion (6) est basculé.
